Europäisches Patentamt

European Patent Office (11) Veröffentlichungsnummer: **0 081 505**

Office européen des brevets **B1**

(12) **EUROPÄISCHE PATENTSCHRIFT**

(45) Veröffentlichungstag der Patentschrift:
29.05.85

(51) Int. Cl.⁴: **B 23 B 51/00**

(21) Anmeldenummer: **82901585.8**

(22) Anmeldetag: **10.06.82**

(86) Internationale Anmeldenummer:
**PCT/CH 82/00077**

(87) Internationale Veröffentlichungsnummer:
**WO 82/04412 (23.12.82 Gazette 82/30)**

(54) **BOHRER UND VERWENDUNG DESSELBEN ZUM BOHREN VON LEITERPLATTEN.**

(30) Priorität: 16.06.81 CH 3942/81

(43) Veröffentlichungstag der Anmeldung:
22.06.83 Patentblatt 83/25

(45) Bekanntmachung des Hinweises auf die Patenterteilung:
29.05.85 Patentblatt 85/22

(84) Benannte Vertragsstaaten:
**DE FR GB SE**

(56) Entgegenhaltungen:
**DE - C - 189 583**
**FR - A - 561 141**
**FR - A - 1 548 508**
**GB - A - 5 471**
**GB - A - 153 062**
**GB - A - 2 018 643**
**US - A - 3 994 615**

(73) Patentinhaber: **SPHINXWERKE MÜLLER & CO. AG,
Werkhofstrasse 33 Postfach, CH-4502 Solothurn (CH)**

(72) Erfinder: **FRIEDLI, Paul, Känzeliweg 12,
CH-4500 Solothurn (CH)**

(74) Vertreter: **Meyer, Reinhard, Dipl.-Ing., c/o Dr. A. R. Egli &
Co. Patentanwälte Horneggstrasse 4, CH-8008 Zürich
(CH)**

BUNDESDRUCKEREI BERLIN

## Beschreibung

Vorliegende Erfindung betrifft einen Bohrer nach dem Oberbegriff des Patentanspruchs 1.

Solche Bohrer mit einem Einspannschaft aus Stahl, Messing oder Kunststoff sind bekannt (US-PS 3 751 176 und 4 135 847).

Das Verbinden von Einspannschaft und Hartmetallteil erfolgt durch Kleben, Hartlöten, Einspritzen (Spritzguß) und Einpressen.

Die bekannten Bohrer weisen namentlich folgende Nachteile auf: Einspannschäfte aus Stahl und Messing sind schwer, so daß der Bohrer nicht wesentlich leichter wird als ein sog. Vollhartmetallbohrer. Einspannschäfte aus Kunststoff sind zwar leicht, jedoch unstabil und hygroskopisch. Eine Klebeverbindung wird durch die beim Bearbeiten bei der Bohrerherstellung und beim Gebrauch des Bohrers entstehende Wärme ungünstig beeinflußt. Der Lötspalt bei Lötverbindungen erzeugt Rundlaufabweichungen.

Aus der GB-A-2 018 643 ist ein Bohrer, insbesondere zum Bohren von Leiterplatten, mit einem Hartmetallteil bekannt, der in einer axialen Bohrung eines Einspannschaftes eingespannt ist, wobei der Hartmetallteil und der Einspannschaft durch einen Preßsitz miteinander verbunden sind. Auch dort ist der Einspannschaft aus Stahl hergestellt.

Aufgabe der Erfindung ist die Schaffung eines Bohrers mit leichtem stabilem Einspannschaft und einer einwandfreien Verbindung zwischen letzterem und dem Hartmetallteil.

Die Erfindung löst diese Aufgabe durch die im kennzeichnenden Teil des Anspruchs 1 angeführten Merkmale.

Durch die Erfindung werden folgende Vorteile erzielt: Mit der zweiteiligen Ausführung kann im Vergleich mit einem Vollhartmetallbohrer teures Hartmetall eingespart werden. Der Einspannschaft, der das Hauptvolumen des Bohrers darstellt, ist leicht. Der Alu-Schaft ist in sich stabil, und durch die Preßverbindung ist der Hartmetallteil im Schaft sicher gehalten, was einen einwandfreien Rundlauf des Bohrers sichert.

Die Herstellung des erfindungsgemäßen Bohrers ist wesentlich einfacher und daher billiger als jene eines Bohrers mit Einspannschaft aus Kunststoff. Bevorzugte Einzelheiten und Vorteile ergeben sich aus den Ansprüchen 2—10.

Ein Ausführungsbeispiel der Erfindung ist nachstehend anhand der Zeichnung erläutert. Darin ist

Fig. 1 eine Ansicht des Bohrers,

Fig. 2 ein teilweise bearbeiteter Hartmetallstift,

Fig. 3 ein Einspannschaft.

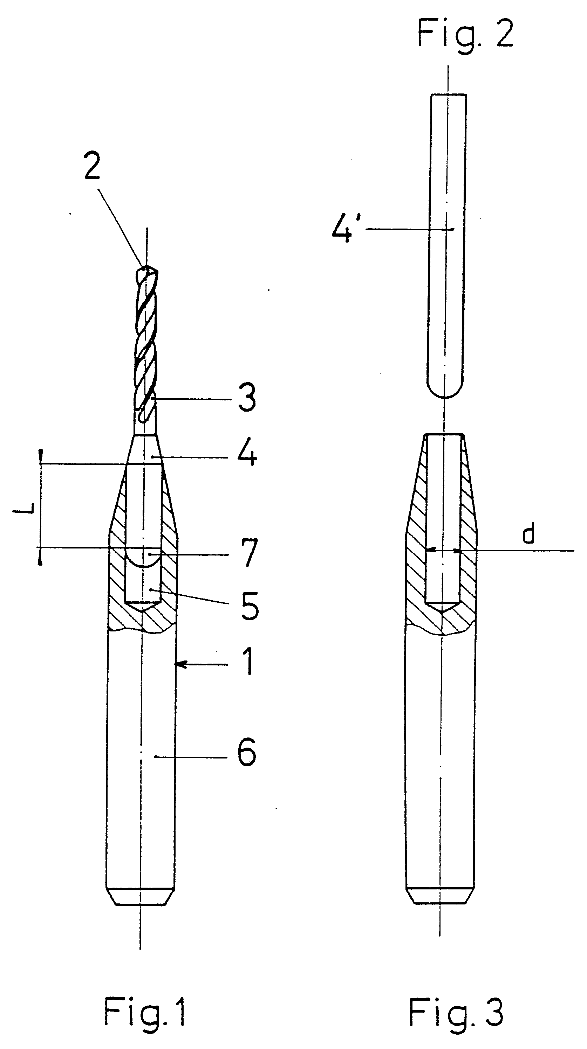

Der Bohrer 1 weist einen mit Schneiden 2 und Spannuten 3 versehenen Hartmetallteil 4 auf. Dieser ist in eine Bohrung 5 des Einspannschaftes 6 eingepreßt. Der Schaft 6 besteht aus Aluminium oder aus einer Aluminiumlegierung, vorzugsweise aus »Decoltal«. Die Bohrung 5 verengt sich leicht konisch gegen den Bohrungsgrund hin. Der Hartmetallteil hat zwecks leichten Einpressens ein halbkugelförmiges hinteres Ende 7. Die Länge L, mit welcher der Hartmetallteil 4 an der Bohrungswand 5 anliegt, beträgt mindestens 4mal den Bohrungsdurchmesser d (Fig. 3). Die Oberfläche des in die Bohrung 5 hineinragenden Endes des Hartmetallteils ist durch Sandstrahlen aufgerauht.

Durch die beschriebene Ausbildung der Bohrung 5 und des mit letzterer zusammenwirkenden Endes des Hartmetallteils 4, ist eine sichere Verbindung der Teile 4, 6 gewährleistet.

Das hintere Ende 7 kann statt kugelig auch konisch oder ballig verjüngt sein. Die Außenfläche des Einspannschaftes kann hartverchromt oder auch eloxiert sein.

Die Herstellung des Bohrers erfolgt vorteilhaft wie folgt:

In den fertig bearbeiteten Schaft 6 wird ein Hartmetallstift 4' eingepreßt, nachdem sein Ende in der oben beschriebenen Weise ausgebildet und behandelt worden ist. Darauf wird der Teil 4 auf den Nenndurchmesser des Bohrers heruntergeschliffen sowie mit den Nuten 3 und den Schneiden 2 versehen.

## Patentansprüche

1. Bohrer, insbesondere zum Bohren von Leiterplatten, mit einem Hartmetallteil (4), der in einer axialen Bohrung (5) eines Einspannschaftes (6) eingespannt und durch einen Preßsitz verbunden ist, dadurch gekennzeichnet, daß der Einspannschaft (6) aus Aluminium oder einer Aluminiumlegierung besteht.

2. Bohrer nach Anspruch 1, dadurch gekennzeichnet, daß der Hartmetallteil (4) ein etwa halbkugelförmiges hinteres Ende (7) hat.

3. Bohrer nach Anspruch 1, dadurch gekennzeichnet, daß der Hartmetallteil (4) ein verjüngtes, ballig geformtes oder konisches hinteres Ende (7) hat.

4. Bohrer nach einem der vorhergehenden Ansprüche, dadurch gekennzeichnet, daß der Einspannschaft (6) eine sich von ihrem äußeren Ende gegen den Bohrungsgrund hin konisch verengende Bohrung hat.

5. Bohrer nach Anspruch 4, dadurch gekennzeichnet, daß die Länge (L), über welche der Hartmetallteil in der Bohrung (5) mit Preßsitz anliegt, $\geqq 4$ d ist, worin d dem Bohrungsdurchmesser entspricht.

6. Bohrer nach Anspruch 5, dadurch gekennzeichnet, daß der in der Bohrung (5) liegende Abschnitt des Hartmetallteils (4) eine durch Sandstrahlen gerauhte Oberfläche aufweist.

7. Bohrer nach einem der vorhergehenden Ansprüche, dadurch gekennzeichnet, daß der Einspannschaft (6) eine Oberflächenbeschichtung aus Hartchrom trägt.

8. Bohrer nach einem der Ansprüche 1—6, dadurch gekennzeichnet, daß der Einspannschaft eloxiert ist.

9. Verfahren zur Herstellung des Bohrers nach einem der vorhergehenden Ansprüche, dadurch gekennzeichnet, daß das hintere Ende (7) des Hartmetallteils (4) bearbeitet und die Oberfläche im Bereich des Endes (7) durch Sandstrahlen gerauht wird, worauf der Hartmetallteil (4) in die Bohrung (5) eingepreßt wird und daß erst nachher die Mantelfläche, die Nuten (3) und die Schneiden (2) geschliffen werden.

10. Verwendung des Bohrers nach einem der Ansprüche 1—8 zum Bohren von Leiterplatten.

## Claims

1. Drilling bit and utilization of this bit for the drilling of printed circuits, with a hard metal portion (4), which is chucked in the axial bore (5) of a clamping shaft (6) and connected by means of a force fit, characterized in that the clamping shaft (6) consists of aluminium or an aluminium alloy.

2. Drilling bit according to claim 1, characterized in that the hard metal portion (4) has a hemispherial-shaped rear end portion (7).

3. Drilling bit according to claim 1, characterized in that the hard metal portion (4) has a tapered, ball-shaped or conical rear end (7).

4. Drilling according to one of the previous claims, characterized in that the clamping shaft (6) has a bore that is conically tapered from a wide outside to a narrow bottom.

5. Drilling bit according to claim 4, characterized in that the length (L), over which the hard metal contacts the bore (5) in the force fit is equal to or larger than four times the diameter (d) of the bore.

6. Drilling bit according to claim 5, characterized in that the portion of the hard metal portion (4) within the bore (5) has a surface roughened by a sand blasting process.

7. Drilling bit according to one of the previous claims, characterized in that the clamping shaft (6) has a surface layer of hard chrome.

8. Drilling bit according to one of the claims 1 to 6, characterized in that the clamping shaft (6) is anodised.

9. Method for the production of the drilling bit according to one of the previous claims, characterized in that the rear end (7) of the hard metal portion (4) is finished and that the surface in the area of the rear end (7) is roughened in a sand blasting process, after which the hard metal portion (4) is inserted into the bore (5), and that, afterwards, the exterior surface, the grooves (3) and the edge (2) are polished.

10. Use of the drilling bit according to the claims 1 to 8 for the drilling of printed circuit.

## Revendications

1. Foret, en particulier pour le perçage de circuits imprimés, avec une partie en métal dur au carbure (4) fixée par emmanchement dans un trou cylindrique axial et borgne (5) d'un manchon de fixation (6), caractérisé parle fait que le manchon de blocage (6) est en aluminium ou en alliage d'aluminium.

2. Foret d'après la revendication 1, caractérisé par le fait que la partie en métal dur (4) à une extrémité arrière en forme de calotte demiesphérique (7).

3. Foret d'après la revendication 1, caractérisé par le fait que la partie en métal dur (4) possède à son extrémité arrière une reduction sphérique ou conique (7).

4. Foret d'après les revendications précitées, caractérisé par le fait que le manchon de blocage (6) possède un alésage conique ouvert vers l'extérieur et étranglé vers le fond.

5. Foret d'après la revendication 4, caractérisé par le fait que la longueur (L) sur laquelle la partie en métal dur portant sur l'emmanchement du trou (5) est égale ou supérieure à 4 d, d étant le diamètre du trou.

6. Foret d'après la revendication 5, caractérisé par le fait que dans le trou (5), la partie correspondante en métal dur (4) présente une surface rugeuse obtenue par sablage.

7. Foret d'après une des revendications précitées, caractérisé par le fait que le manchon de blocage (6) a subi un traitement de surface par chromage dur.

8. Foret d'après les revendications 1 à 6, caractérisé par le fait que le manchon est anodisé.

9. Procédé pour la fabrication du foret d'après une des revendications précitées, caractérisé par le fait que l'extrémité arrière (7) de la partie en métal dur (4) sera usinée et rendue rugeuse par sablage, cette partie en métal dur (4) venant alors se bloquer dans le trou (5) et que seulement ensuite les surfaces latérales, les gorges (3) et les angles de coupe seront meulés.

10. Utilisation du foret d'après des revendications 1 à 8 pour le perçage de circuits imprimés.

Fig. 2

Fig.1

Fig. 3